# FASCICULE DE BREVET EUROPEEN

(11) **EP 4 476 165 B1**
(45) Date de publication et mention de la délivrance du brevet: **18.03.2026**
(21) Numéro de dépôt: 23702600.0
(22) Date de dépôt: 03.02.2023
(51) Int. Cl.: C01B 3/00, F17C 11/00

(54) **DISPOSITIF DE STOCKAGE D'HYDROGÈNE SOUS FORME SOLIDE**
VORRICHTUNG ZUR SPEICHERUNG VON WASSERSTOFF IN FESTER FORM
DEVICE FOR STORING HYDROGEN IN SOLID FORM

(30) Priorité: 11.02.2022 FR 2201193
(43) Date de publication de la demande: 18.12.2024
(73) Titulaire: Mincatec Energy, 90400 Meroux-Moval (FR)
(72) Inventeur: BOUTELEUX, Emmanuel, 90400 Meroux-Moval (FR); MANAI, Sakreddine, 90400 Meroux-Moval (FR); GENNINASCA, Yann, 90400 Meroux-Moval (FR)
(74) Mandataire: Rataboul, Xavier
(86) Numéro de dépôt international: PCT/EP2023/052686
(87) Numéro de publication internationale: WO 2023/152046

(56) Documents cités:
- WO-A1-2015/169740
- CN-A- 108 993 324
- FR-A1- 2 924 787

## Description

L'invention se rapporte à un dispositif de stockage d'hydrogène sous forme solide, en particulier pour la réalisation de réservoirs de stockage compacts et modulaires d'hydrogène sous forme d'hydrures métalliques à basse pression.

L'hydrogène est utilisé dans de nombreux domaines industriels, notamment comme combustible ou comme réactif. Dans ce cadre, compte tenu de son volume à l'état gazeux et de son explosivité à l'air, il est souhaitable que l'hydrogène soit stocké sous une forme assurant un encombrement réduit et un confinement sûr.

Actuellement trois technologies majeures existent.

La première consiste à stocker l'hydrogène gazeux sous très haute pression (entre 350 et 700 bars) pour le comprimer dans des réservoirs conçus pour résister à de telles pressions et qui sont par conséquent coûteux. Ce type de stockage nécessite, en outre, une quantité importante d'énergie pour comprimer l'hydrogène et pour le refroidir. Le bilan énergétique de l'utilisation d'hydrogène avec ce mode de stockage est donc mauvais.

La deuxième technologie consiste à stocker l'hydrogène sous forme liquide. Il est alors nécessaire de maintenir une température inférieure à - 252.87°C pour liquéfier l'hydrogène dans des réservoirs. Ce type de stockage nécessite une quantité importante d'énergie pour maintenir liquéfié l'hydrogène.

La troisième technologie consiste à stocker l'hydrogène gazeux dans un support solide sous forme de poudre compactée d'hydrure métallique.

Cette technologie permet des conditions de stockage plus sûres et une dépense énergétique limitée. Certains métaux ou alliages peuvent incorporer de manière réversible des atomes d'hydrogène dans le réseau cristallin. L'hydrogène est absorbé/désorbé par ces matériaux en fonction des conditions de température et de pression. Il s'agit par exemple du Palladium (Pd), du Magnésium (Mg), de ZrMn2, Mg2Ni ou d'alliages comme Mg-Mg2Ni ou d'alanates.

Par convention, le terme « hydrure métallique » tel qu'utilisé ici couvre, selon l'étape du procédé, le métal partiellement ou complètement chargé d'hydrogène.

On distingue généralement deux types d'hydrures métalliques : les hydrures lourds (principalement LaNi5, et des alliages tels que l'alliage ferro-titane ou l'alliage à base de Ti-V-Cr) et les hydrures légers (principalement le magnésium et le lithium).

Avec les hydrures lourds, l'hydrogène est absorbé à température et pression ambiantes. L'exothermie de la réaction est généralement modérée (inférieure ou égale à 35 kJ/mol H2). Ensuite, lors de l'utilisation, l'hydrogène est désorbé à température et pression ambiantes. L'apport d'énergie nécessaire pour utiliser l'hydrogène est raisonnable.

Au contraire, avec les hydrures légers, l'absorption de l'hydrogène par l'hydrure métallique léger nécessite une température plus élevée (environ 300°C pour MgH2). Cette réaction est très exothermique (75 kJ/mol H2). L'apport d'énergie nécessaire pour initier la réaction d'absorption de l'hydrogène est donc modéré. Par contre, la réaction d'absorption s'interrompt spontanément si la chaleur produite n'est pas évacuée. De plus, lors de l'utilisation, la désorption de l'hydrogène nécessite un apport de chaleur important, la réaction étant endothermique.

L'utilisation d'hydrures, en particulier les hydrures légers, nécessite donc une gestion thermique très précise, tant lors de l'absorption que de la désorption de l'hydrogène.

En outre, quel que soit le type d'hydrure utilisé, les réactions d'absorption/désorption génèrent un gonflement/dégonflement de l'hydrure, c'est-à-dire une expansion/contraction volumique de l'hydrure lors de la charge/décharge de l'hydrogène.

La variation de volume et la variation thermique doivent être prises en compte pour la réalisation du réservoir et son remplissage en hydrure métallique, car les contraintes mécaniques subies par les parois du réservoir peuvent aboutir à une fissuration, voire une rupture dudit réservoir.

Enfin, il a été constaté qu'au bout d'un nombre de cycles conséquent, mais compatible avec une utilisation normale, le support d'hydrure métallique compacté « décrépite », c'est-à-dire qu'il s'effrite et tend à retourner à un état pulvérulent.

La présente invention vise à proposer un dispositif et un réservoir de stockage d'hydrogène sous forme solide sûr (c'est-à-dire sans risque de rupture sous les contraintes mécaniques de variation de volume lors de l'absorption/désorption), facile à fabriquer, offrant une cinétique rapide d'absorption de l'hydrogène.

Le document US6969545 décrit un réservoir de stockage d'hydrogène sous forme solide (hydrure). Ce réservoir comprend un unique grand volume d'hydrure, avec une seule entrée et une seule sortie, entouré d'une couche de graphite naturel expansé (GNE), elle-même en contact avec la paroi rigide (indéformable) du réservoir. Cette couche permet le transfert thermique et peut être comprimée lors de l'absorption de l'hydrogène.

Cependant, en raison du grand volume d'hydrure, le temps d'absorption/désorption de l'hydrogène est trop important pour que ce réservoir soit exploitable.

Le document CN108993324 décrit un réservoir rempli de pastilles compactées de plusieurs mélanges d'hydrure métallique et de GNE agencés de manière concentrique. Le document FR2939784 vise également à proposer un réservoir de stockage d'hydrogène minimisant les variations de volume. Il propose un réservoir de stockage d'hydrogène utilisant un hydrure métallique léger, en particulier de l'hydrure de magnésium, mélangé et compacté avec une matrice thermiquement conductrice (choisie dans le groupe constitué par le GNE, les feutres métalliques, les céramiques non oxydes et les mousses de cuivre revêtues de céramiques non oxydes) et combiné à un système de stockage réversible de la chaleur d'absorption.

Le matériau compacté peut comprendre 80 à 99 % en poids d'hydrure de magnésium et 20 à 1 % en poids de GNE.

Le réservoir comprend au moins un conteneur tubulaire délimité par une paroi thermiquement conductible, plongé dans un matériau à changement de phase.

Dans chaque conteneur tubulaire sont empilées verticalement plusieurs galettes solides formées d'un mélange de matériau compacté comprenant de l'hydrure métallique et de particules formant une matrice thermiquement conductrice de GNE. Chaque pastille est munie d'un trou central destiné à recevoir un tube poreux en communication fluidique avec l'entrée et la sortie d'hydrogène. Entre chaque pastille sont prévues des plaques métalliques.

Les pastilles sont en relation de transfert de chaleur avec le matériau à changement de phase extérieur par l'intermédiaire de la paroi de chaque conteneur qui est en acier de type acier inoxydable. Pour gérer les problèmes d'expansion, ce document propose de fournir des moyens mécaniques permettant de maintenir les pastilles en contact avec la paroi.

Ce dispositif est complexe, coûteux, et difficile à mettre en œuvre en raison de la présence du matériau à changement de phase.

En outre, ce dispositif peut présenter un danger car, du fait de l'utilisation de pastilles empilées verticalement, de la poudre d'hydrure tombe en fond de réservoir lors de la décrépitation des pastilles et peut déclencher une explosion sous certaines conditions opérationnelles.

L'invention vise donc à éviter ce risque dû à la décrépitation naturelle et inévitable du compact d'hydrure métallique sous forme de pastilles.

L'invention a donc pour objet de proposer une solution de stockage d'hydrogène sous forme d'hydrures métalliques à basse pression permettant la conception et la réalisation de réservoirs d'hydrogène compacts, modulaires, sûrs (c'est-à-dire sans risque de rupture de la paroi sous les contraintes mécaniques et sans risque d'explosion) et d'efficience énergétique améliorée (c'est-à-dire ayant une vitesse de chargement augmentée).

À cette fin, l'invention propose un agencement particulier, notamment de l'hydrure métallique et du GNE, qui permet de résoudre tous ces problèmes, à savoir limiter les contraintes mécaniques contre la paroi du réservoir lors des cycles de chargement/déchargement de l'hydrogène, limiter les risques d'explosion lié à la décrépitation, tout en accélérant la vitesse de chargement et la capacité de chargement grâce à un échange thermique amélioré.

L'invention a plus précisément pour objet une pastille de stockage d'hydrogène sous forme solide destinée à être intégrée dans un réservoir de stockage d'hydrogène, la pastille comprenant un anneau périphérique de diamètre extérieur déterminé en Graphite Naturel Expansé (GNE) de hauteur déterminée, entourant une galette d'un hydrure métallique sous forme de poudre compactée.

Ainsi, l'invention propose de ne pas mélanger l'hydrure métallique et le GNE, mais de ceindre la pastille d'hydrure métallique compacté d'un anneau de GNE, de préférence de structure feuilletée, et de séparer ces deux éléments par des plaques de matériau conducteur thermique.

Selon des formes de réalisation particulières :
- l'anneau périphérique de GNE peut être constitué d'un empilement axial de feuillets annulaires de GNE de hauteur inférieure à la hauteur de l'anneau périphérique ;
- lesdits feuillets annulaires de GNE peuvent présenter une hauteur de l'ordre du dixième de millimètre, de préférence entre 1 et 5 dixièmes de millimètres.

L'invention a également pour objet un réservoir de stockage d'hydrogène sous forme solide comprenant :
- un récipient cylindrique creux s'étendant selon un axe longitudinal, fermé à une première extrémité, ouvert à une seconde extrémité, délimité par une paroi radiale extérieure conductrice thermique, et comprenant un empilement alterné de disques rigides en matériau conducteur thermique de diamètre déterminé et de pastilles précédentes, chaque pastille étant interposée entre deux disques rigides, chaque disque rigide étant percé d'un trou et chaque galette d'hydrure métallique étant percée d'un trou en regard du trou des disques pour ménager un passage axial, et
- un couvercle amovible de fermeture réversible étanche de la seconde extrémité du récipient cylindrique creux, le couvercle comprenant un orifice d'entrée/sortie de l'hydrogène.

Selon des formes de réalisation particulières :
- le réservoir peut comprendre, en outre, un tube de diffusion passive d'hydrogène s'étendant axialement le long du récipient cylindrique creux, au travers des trous des disques rigides et des galettes d'hydrure des pastilles, et en liaison fluidique étanche avec l'orifice du couvercle amovible de fermeture réversible étanche ;
- ledit tube de diffusion passive d'hydrogène peut être en matériau poreux à l'hydrogène ;
- l'orifice d'entrée/sortie de l'hydrogène peut être en connexion fluidique avec une vanne de fermeture/ouverture ;
- le récipient cylindrique creux peut comprendre, entre un dernier disque rigide de l'empilement et le couvercle amovible de fermeture réversible étanche, un espace libre d'expansion axiale de l'empilement de pastilles ; et/ou
- le réservoir peut être conformé pour être utilisé en position allongée dans laquelle l'axe longitudinal du récipient est horizontal par rapport à la gravité, le réservoir comprenant, en outre, un ressort de compression entre le dernier disque rigide de l'empilement et le couvercle amovible de fermeture réversible étanche.

D'autres caractéristiques de l'invention seront énoncées dans la description détaillée ci-après faite en référence aux figures annexées, données à titre d'exemple, et qui représentent, respectivement :
[Fig. 1], une vue schématique en perspective d'un empilement de pastilles de stockage d'hydrogène selon l'invention entre lesquelles sont intercalés des disques d'aluminium ;
[Fig. 2], une vue schématique en coupe de l'empilement de la figure 1 ;
[Fig. 3], une vue schématique en perspective de deux feuillets de GNE d'un empilement de feuillets formant un anneau périphérique de GNE selon l'invention ;
[Fig. 4], une vue schématique en coupe d'un réservoir selon l'invention ;
[Fig. 5], une vue schématique en coupe du réservoir de la figure 4 comprenant une pluralité de pastilles selon l'invention ; et
[Fig. 6], une vue schématique en coupe d'un réservoir selon l'invention utilisé en position allongée.

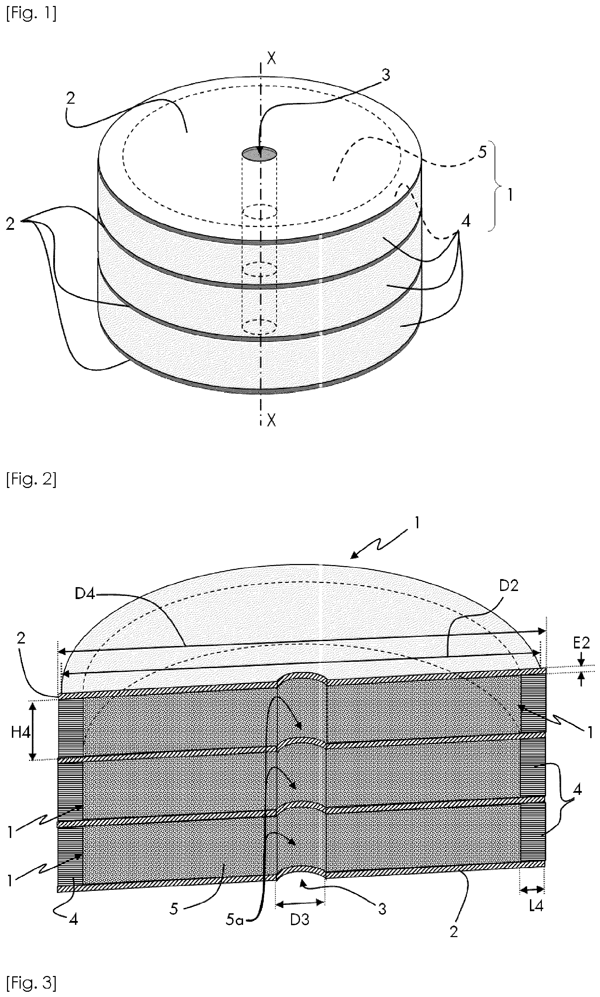

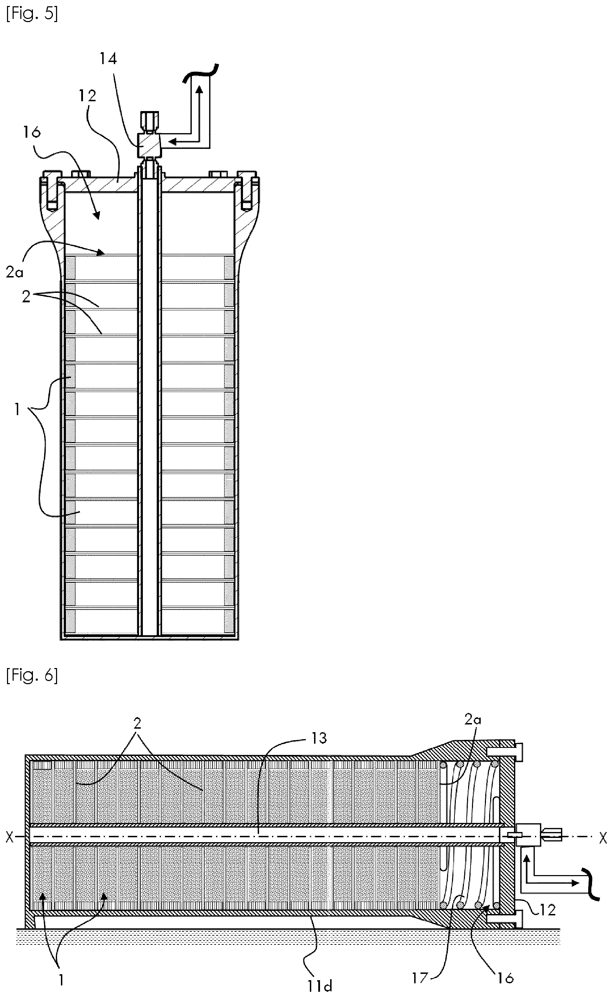

Les figures 1 et 2 illustrent une pastille 1 de stockage d'hydrogène sous forme solide selon l'invention. Elle est destinée à être intégrée dans un réservoir de stockage d'hydrogène (voir figures 5 et 6).

La pastille 1 comprend un anneau périphérique 4 de diamètre extérieur déterminé D4 en Graphite Naturel Expansé (GNE) de hauteur H4 déterminée, entourant une galette d'un hydrure métallique 5 sous forme de poudre compactée, également de hauteur H4. La poudre compactée est une poudre ayant subi un effort uni axial de plusieurs tonnes permettant à la poudre de devenir solidaire et aboutissant à une galette solide, c'est-à-dire autoportante, d'hydrure métallique 5.

Le diamètre D4 est égal au diamètre intérieur du réservoir dans lequel la pastille 1 est destinée à être intégrée pour assurer un contact étroit entre l'anneau de GNE et la paroi du réservoir.

La figure 3 illustre un mode de réalisation particulièrement avantageux, dans lequel l'anneau périphérique 4 de GNE est constitué d'une superposition axiale (le long de l'axe X-X en utilisation) d'une pluralité de feuillets annulaires 4a de GNE (sur cette figure seuls deux feuillets sont illustrés). Ces feuillets 4a sont de hauteur H4a inférieure à la hauteur H4 de l'anneau périphérique 4. De préférence, les feuillets annulaires de GNE présentent une hauteur de l'ordre du dixième de millimètre, de préférence entre 1 et 5 dixièmes de millimètres.

Cette structure en feuillets superposés permet une efficacité étonnante à la fois en termes d'absorption des contraintes radiales, de transferts thermiques, d'accompagnement des contraintes axiales et de stabilité dans le temps.

De préférence, l'hydrure métallique 5 sous forme de poudre compactée est un hydrure de la famille d'hydrures métalliques AB2 qui présente une capacité gravimétrique de stockage pouvant atteindre 1,8 wt% (kg_H2/kg hydrure métallique) pour des conditions de fonctionnement modérées (pression modérée, c'est-à-dire inférieure à 100 bars, et température inférieure à 100°, de préférence à température ambiante).

Avantageusement, un hydrure métallique fonctionnant particulièrement bien avec la structure d'une pastille selon l'invention est l'hydrure métallique commercialisé sous le nom Hydralloy^{®} C5 qui est un alliage à base de Ti / Zr / Mn / V / Fe. La poudre est initialement sous forme de particules de taille inférieure à 600 µm. Après compaction, la masse volumique apparente (masse de la poudre / volume apparent de la poudre) de l'hydrure métallique est de 2,93 g/cm3. Sa masse volumique absolue est de 6,41 g/cm3.

Grâce à cet agencement de la pastille selon l'invention, les cycles de compression/décompression volumiques dus à la charge/décharge de l'hydrogène sont particulièrement bien absorbés latéralement par l'anneau de GNE, tout en maintenant les transferts thermiques, et la vitesse de charge/décharge est très largement accélérée par rapport aux systèmes connus n'ayant pas d'anneau périphérique de GNE.

Selon l'invention, les pastilles 1 sont empilées en alternance avec des disques rigides 2 en matériau conducteur thermique.

En d'autres termes, les disques 2 sont espacés l'un de l'autre par l'anneau périphérique 4 en Graphite Naturel Expansé (GNE) et la galette d'un hydrure métallique 5 contre lequel les disques reposent librement, c'est-à-dire sans y être fixé.

L'anneau périphérique 4 en GNE assure le rôle d'un espaceur ménageant entre les disques 2 un espace de réception de la galette d'hydrure métallique 5.

Chaque disque 2 présente un diamètre D2 légèrement inférieur au diamètre intérieur du réservoir dans lequel il est destiné à être empilé pour permettre la dilatation des disques 2 lors des transferts thermiques et leur mise en contact avec la paroi 11b du réservoir sans lui appliquer de contraintes.

Chaque disque 2 est percé d'au moins un trou 3 (ici un unique trou central 3).

La galette d'hydrure métallique 5 comprend également un trou 5a agencé de manière annulaire par rapport aux trous 3, de manière à laisser un passage libre au travers de l'empilement. Ce passage libre permet la circulation de l'hydrogène vers et depuis l'hydrure métallique 5 des pastilles 1, et son évacuation par les trous 3 et 5a. Comme préciser ci-après, un tube perméable à l'hydrogène est avantageusement introduit par les trous 3-5a pour conduire l'hydrogène dans le circuit du réservoir et du système de stockage d'hydrogène. Ce tube permet également de filtrer l'hydrogène, c'est-à-dire d'empêcher toute particule d'hydrure métallique provenant des galettes 5 de polluer l'hydrogène sortant du réservoir. Enfin, ce tube a également un rôle mécanique de guidage lors de la réalisation de l'empilement dans le réservoir et permet de parfaitement centrer les pastilles 1 et les disques rigides 2.

La figure 2 montre un mode de réalisation dimensionnel donné uniquement à titre indicatif et non limitatif. Les proportions ne sont pas respectées sur la figure qui n'est donnée qu'à titre illustratif.

Sur cette figure, les disques 2 sont en aluminium et présentent un diamètre D2 de 111,8 millimètres et une épaisseur E2 de 1 millimètre. Le trou 3 présente un diamètre D3 de 10,2 millimètres.

L'anneau périphérique en GNE 4 présente une hauteur H4 de 15 millimètres, et une largeur L4 de 5,6 millimètres.

Plus généralement, l'anneau périphérique en GNE 4 présente une hauteur H4 égale à 5 à 15% du rayon (D4/2).

Le matériau des disques 2 est choisi pour optimiser les transferts thermiques et permettre l'évacuation de la chaleur au contact de la paroi du réservoir et des galettes d'hydrure métallique 5. Il est également choisi pour avoir une masse volumique la plus faible possible. Il peut, par exemple, être choisi parmi l'acier inoxydable, le cuivre, mais il est avantageusement en aluminium qui optimise le rapport conduction thermique/masse volumique. Par exemple, les disques en aluminium font 1 millimètre d'épaisseur E2 environ.

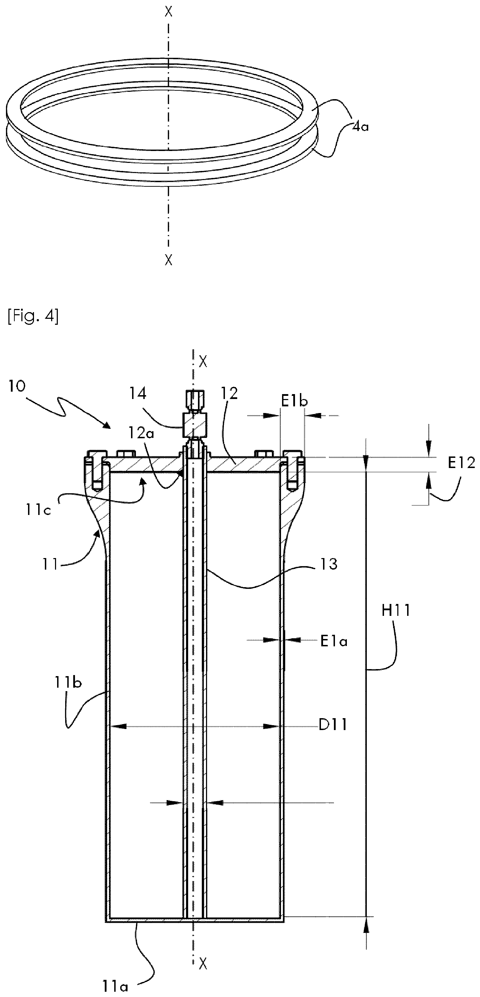

Les figures 4 et 5 illustrent un réservoir 10 de stockage d'hydrogène sous forme solide selon l'invention, utilisé verticalement. Il est conformé pour incorporer une pluralité de pastilles 1 selon l'invention.

Le réservoir 10 comprend un récipient cylindrique creux 11, s'étendant selon un axe longitudinal X-X, fermé à une première extrémité 11a et délimité par une paroi radiale extérieure conductrice thermique 11b. Le récipient 11 présente une seconde extrémité ouverte 11c pour permettre l'accès à l'intérieur dudit récipient.

Le réservoir 10 comprend également un couvercle amovible de fermeture réversible étanche 12 de la seconde extrémité 11c du récipient cylindrique creux 11 pour permettre l'accès à l'intérieur du récipient et y agencer les pastilles, et pour fermer de manière étanche le récipient en vue de son utilisation de stockage/déstockage de l'hydrogène. Le couvercle 12 comprend également un orifice 12a d'entrée/sortie de l'hydrogène en connexion fluidique avec une vanne de fermeture/ouverture 14.

La paroi 11b du récipient en contact avec les pastilles de stockage 1 est aussi fine que possible pour optimiser l'évacuation de chaleur. Bien entendu, cette paroi doit permettre de supporter sans déformation la pression de service d'hydrogène et la compression mécanique des pastilles 1. Grâce aux pastilles selon l'invention, la compression mécanique des pastilles 1 est très limitée puisqu'elle est absorbée par l'anneau périphérique de GNE. Au niveau de la seconde extrémité 11c, la paroi 11b est avantageusement plus épaisse pour permettre la fixation du couvercle 12.

De préférence, le réservoir 10 comprend également un tube 13 de diffusion passive d'hydrogène s'étendant axialement le long du récipient cylindrique creux, au travers des trous 3 des disques 2 et des trous 5a des pastilles. Le tube 13 est également en liaison fluidique étanche avec l'orifice 12a du couvercle amovible de fermeture réversible étanche.

Le tube 13 facilite également l'insertion des pastilles 1 et des disques 2 dans le récipient 11 en centrant l'ensemble et donc en assurant leur positionnement optimal, en particulier en ce qui concerne le contact entre l'anneau périphérique de GNE 4, les disques 2 et la paroi 11b du récipient 11. Le tube 13 permet aussi un filtrage d'éventuels résidus de poudre d'hydrure métallique lors de la désorption.

Le tube 13 de diffusion passive d'hydrogène est un tube en matériau poreux à l'hydrogène de façon à permettre l'absorption/désorption de l'hydrogène dans et hors de l'hydrure métallique 5.

Le tube 13 de diffusion passive d'hydrogène s'étend axialement (parallèlement à axe longitudinal X-X) dans tout le récipient et il est relié à une vanne de fermeture/ouverture 14 à l'extérieure du réservoir 10 pour interdire/autoriser la circulation d'hydrogène hors ou vers le réservoir 10. Avantageusement, la vanne 14 est pilotable manuellement et/ou automatiquement par une unité centrale du système de stockage (non illustré).

De préférence, le récipient cylindrique creux 11 comprend, entre un dernier disque 2a de l'empilement et le couvercle amovible 12 de fermeture, un espace 16 d'expansion axiale de l'empilement de pastilles.

En utilisation (voir figure 4), l'anneau 4 en GNE des pastilles 1 est agencé entre la paroi 11b du réservoir 10 et l'hydrure métallique compacté 5. De cette manière, l'anneau 4 en GNE permet de réduire les contraintes mécaniques exercées sur la paroi 11b du réservoir en absorbant cette contrainte, et permet d'améliorer la conductivité thermique pour évacuer la chaleur.

Les disques 2 permettent non seulement la conduction thermique vers les parois du réservoir, mais également, par leur poids, de guider radialement une partie des contraintes d'expansion de l'hydrure métallique 5 vers l'anneau de GNE 4 lors des cycles de compression/décompression volumiques dus à la charge/décharge de l'hydrogène, l'anneau périphérique de GNE absorbant ainsi une grande partie de l'augmentation de volume de l'hydrure métallique 5 sans transmettre la contrainte à la paroi du réservoir.

Le reste de l'augmentation de volume de la galette d'hydrure se traduit par une augmentation légère de la hauteur de ladite galette. Parallèlement, au cours de l'absorption de la contrainte radiale, l'anneau de GNE 4 est compressé contre la paroi et sa hauteur H4 augmente également, tout comme la hauteur de la galette d'hydrure augmente. Tout ceci est permis par le fait que les disques rigides 2 ne sont pas solidaires de l'anneau de GNE 4 ni de la galette d'hydrure métallique 5.

L'ensemble pastilles 1 - disques 2 - espace d'expansion 16 permet une sorte de « respiration » de l'empilement qui ne génère que très peu de contraintes radiales contre le réservoir, et aucune compression mécanique axiale puisque l'espace 16 permet l'expansion axiale des pastilles. Cette dernière ne se traduit que par une augmentation de pression d'hydrogène, compatible avec la pression de service, et que le réservoir peut facilement supporter sans risque mécanique.

Étonnamment, ce guidage latéral de la contrainte mécanique par les plaques rigides 2 vers l'anneau de GNE 4 s'accompagne également d'une amélioration très sensible du temps d'absorption/désorption de l'hydrogène par rapport à une pastille dépourvue d'anneau périphérique en GNE.

Ce gain de temps est particulièrement amélioré avec un anneau en GNE constitué de feuillets 4a superposés axialement, comme illustré en figure 3. Cette superposition de feuillets a des propriétés de conductivité thermique anisotrope. Dans le sens perpendiculaire à l'axe X-X, la conductivité est bien plus importante.

Avec un réservoir dimensionné selon l'exemple ci-après, il est ainsi possible de stocker 150 grammes d'hydrogène gazeux en moins de 10 minutes.

Dans un mode de réalisation dimensionnel donné uniquement à titre indicatif et non limitatif, la paroi 11a est en alliage d'aluminium et présente, dans sa partie destinée à être en contact avec les pastilles 1, une épaisseur E1a d'environ 5 millimètres, et dans sa partie de fixation du couvercle 12, une épaisseur E1b d'environ 20 millimètres. Le couvercle 12, également en alliage d'aluminium, présente une épaisseur E12 d'environ 12 millimètres.

Le récipient 11 présente un diamètre interne D11 sensiblement égal au diamètre D4 des anneaux 4 de GNE des pastilles 1.

Par sensiblement égal, on entend un diamètre égal à D4 au jeu de fabrication près, nécessaire pour passer les pastilles dans le réservoir.

Les disques 2 présentent un diamètre D2 légèrement inférieur au diamètre D4 des anneaux 4 de GNE pour permettre leur dilatation lors des transferts thermiques et entrer en contact avec la paroi 11b du réservoir sans lui appliquer de contrainte importante.

Par exemple, le diamètre interne D11 est égal à 112,1 millimètres, alors que le diamètre D4 des anneaux de GNE est égal à 112 millimètres, et le diamètre D2 des disques est égal à 111,8 millimètres

Le récipient 11 présente une hauteur H11 supérieure à la hauteur de l'empilement de pastilles 1 pour laisser un espace d'expansion axiale 16 libre entre la dernière pastille 1a de l'empilement de pastilles et le couvercle amovible 12 de fermeture réversible étanche. Par exemple la hauteur H11 est de 320 millimètres environ, soit la possibilité de stocker dix-sept pastilles 1 de 17 millimètres de hauteur globale tout en laissant un espace d'expansion 16 de 31 millimètres de haut.

Le réservoir selon l'invention peut facilement être allongé ou raccourci selon la capacité de stockage choisie, et donc le nombre (et la hauteur à diamètre égal) de pastilles que l'on souhaite pouvoir installer.

La structure de l'empilement selon l'invention de pastilles 1 et de disques 2 rend également le réservoir particulièrement sûr.

En effet, lors du vieillissement du réservoir et des pastilles, après de nombreux cycles de chargement/déchargement d'hydrogène, les galettes 5 d'hydrure métallique décrépitent, c'est-à-dire qu'elles tendent à redevenir pulvérulentes.

Grâce aux anneaux périphériques de GNE, cette poudre d'hydrure métallique est maintenue entre les disques. Grâce à cet anneau de GNE périphérique 4, très peu de poudre peut tomber par gravité contre la paroi 11a de la première extrémité du réservoir. Au contraire, dans les réservoirs connus, qui ne comprennent pas d'anneaux périphériques de GNE, beaucoup de poudre tombe par gravité au fond du réservoir et présente un risque explosif.

La figure 6 illustre un mode de réalisation encore plus sûr et permis par la structure des pastilles selon l'invention. Dans ce mode de réalisation, le réservoir est utilisé en position horizontale, c'est-à-dire que son axe longitudinal X-X est sensiblement horizontal.

Comme dans le mode de réalisation précédent, les pastilles 1 sont alternées avec des disques 2 autour du tube 13. Dans ce mode de réalisation, le réservoir comprend, en outre, dans l'espace d'expansion 16, un ressort de compression 17 entre le dernier disque rigide 2a de l'empilement et le couvercle amovible 12 de fermeture réversible étanche.

Ce ressort 17 permet de maintenir l'empilement alterné de pastilles 1 et de disques 2 contre la paroi de la première extrémité 11a du réservoir tout en permettant l'expansion axiale lors des cycles de chargement/déchargement d'hydrogène.

Ce mode de réalisation est particulièrement sûr. En effet, grâce aux anneaux périphériques de GNE, cette poudre d'hydrure métallique est maintenue entre les disques. Si malgré tout de la poudre arrive à passer entre l'anneau de GNE et les disques, elle tombe par gravité contre la paroi 11d située en bas du réservoir, dans la position d'utilisation.

Cette paroi 11d étant beaucoup plus étendue que la paroi 11a, la poudre ne peut pas s'accumuler et présente encore moins de risque d'explosion qu'en position verticale.

Ce dispositif selon l'invention est simple tout en pouvant absorber les contraintes mécaniques dues à l'expansion de l'hydrure métallique lors du chargement en hydrogène et en étant particulièrement efficace en termes de temps de chargement en hydrogène et de sécurité. Cette efficacité de temps de chargement est liée, de manière étonnante à la conception spécifique des pastilles selon l'invention permettant une absorption différenciée de la contrainte mécanique au sein des pastilles 1 qui limitent l'expansion axiale grâce aux plaques rigides 2, et favorise l'expansion latérale (ou radiale) absorbée par l'anneau périphérique 4 de GNE.

L'invention permet la conception et la réalisation de réservoirs d'hydrogène compacts, légers (car une très grande partie de leur paroi est fine), modulaires, sûrs (c'est-à-dire sans risque de rupture de la paroi sous les contraintes mécaniques ni risque d'explosion) et d'efficience énergétique améliorée (c'est-à-dire ayant une vitesse de chargement augmentée).

## Revendications

1. Pastille (1) de stockage d'hydrogène sous forme solide destinée à être intégrée dans un réservoir (10) de stockage d'hydrogène, la pastille (1) étant **caractérisée en ce qu'**elle comprend un anneau périphérique (4) de diamètre extérieur déterminé (D4) en Graphite Naturel Expansé (GNE) de hauteur déterminée (H4), entourant une galette d'un hydrure métallique (5) sous forme de poudre compactée.

2. Pastille selon la revendication 1, dans laquelle l'anneau périphérique de GNE est constitué d'un empilement axial de feuillets annulaires de GNE de hauteur (H4a) inférieure à la hauteur (H4) de l'anneau périphérique.

3. Pastille selon la revendication 2, dans laquelle les feuillets annulaires de GNE présentent une hauteur de l'ordre du dixième de millimètre, de préférence entre 1 et 5 dixièmes de millimètres.

4. Réservoir (10) de stockage d'hydrogène sous forme solide comprenant :
- un récipient cylindrique creux (11) s'étendant selon un axe longitudinal (X-X), fermé à une première extrémité (11a), ouvert à une seconde extrémité (11c), délimité par une paroi radiale extérieure conductrice thermique (11b), et comprenant un empilement (1a) alterné de disques rigides (2, 2a) en matériau conducteur thermique de diamètre déterminé (D2) et de pastilles (1) selon l'une quelconque des revendications 1 à 3, chaque pastille étant interposée entre deux disques rigides (2, 2a), chaque disque rigide (2, 2a) étant percé d'un trou (3) et chaque galette d'hydrure métallique (5) étant percée d'un trou (5a) en regard du trou (3) des disques pour ménager un passage axial, ;
- un couvercle amovible (12) de fermeture réversible étanche de la seconde extrémité (11c) du récipient cylindrique creux (11), le couvercle comprenant un orifice d'entrée/sortie de l'hydrogène.

5. Réservoir (10) selon la revendication 4, comprenant, en outre, un tube (13) de diffusion passive d'hydrogène s'étendant axialement le long du récipient cylindrique creux, au travers des trous (3, 5a) des disques rigides (2) et des galettes d'hydrure (5) des pastilles (1), et en liaison fluidique étanche avec l'orifice du couvercle amovible de fermeture réversible étanche.

6. Réservoir (10) selon la revendication 5, dans lequel le tube (13) de diffusion passive d'hydrogène est en matériau poreux à l'hydrogène.

7. Réservoir (10) selon la revendication 4, dans lequel l'orifice d'entrée/sortie de l'hydrogène est en connexion fluidique avec une vanne de fermeture/ouverture (14).

8. Réservoir (10) selon l'une quelconque des revendications 4 à 7, dans lequel le récipient cylindrique creux (11) comprend, entre un dernier disque rigide (2a) de l'empilement et le couvercle amovible (12) de fermeture réversible étanche, un espace libre (16) d'expansion axiale de l'empilement de pastilles (1, 1a).

9. Réservoir (10) selon la revendication 8, conformé pour être utilisé en position allongée dans laquelle l'axe longitudinal (X-X) du récipient est horizontal par rapport à la gravité, le réservoir (10) comprenant, en outre, un ressort de compression entre le dernier disque rigide (2a) de l'empilement et le couvercle amovible (12) de fermeture réversible étanche.

## Patentansprüche

1. Pellet (1) zur Speicherung von Wasserstoff in fester Form, das dazu bestimmt ist, in einen Behälter (10) zur Speicherung von Wasserstoff integriert zu werden, wobei das Pellet (1) **dadurch gekennzeichnet ist, dass** es einen Umfangsring (4) mit einem bestimmten Außendurchmesser (D4) aus expandiertem Naturgraphit (ENG) von bestimmter Höhe (H4) umfasst, der eine Scheibe aus einem Metallhydrid (5) in Form von komprimiertem Pulver umgibt.

2. Pellet nach Anspruch 1, wobei der Umfangsring aus ENG aus einem axialen Stapel ringförmiger Blätter aus ENG mit einer Höhe (H4a) besteht, die geringer als die Höhe (H4) des Umfangsrings ist.

3. Pellet nach Anspruch 2, wobei die ringförmigen Blätter aus ENG eine Höhe in der Größenordnung eines Zehntelmillimeters, vorzugsweise zwischen 1 und 5 Zehntelmillimeter, aufweisen.

4. Behälter (10) zur Speicherung von Wasserstoff in fester Form, umfassend:
- ein hohles zylindrisches Gefäß (11), das sich entlang einer Längsachse (X-X) erstreckt, an einem ersten Ende (11a) geschlossen ist, an einem zweiten Ende (11c) offen ist, durch eine thermisch leitende äußere radiale Wand (11b) begrenzt wird und einen abwechselnden Stapel (1a) aus starren Platten (2, 2a) aus thermisch leitendem Material mit einem bestimmten Durchmesser (D2) und aus Pellets (1) nach einem der Ansprüche 1 bis 3 umfasst, wobei jedes Pellet zwischen zwei starren Platten (2, 2a) angeordnet ist, wobei jede starre Platte (2, 2a) mit einem Loch (3) durchbohrt ist und wobei jede Scheibe aus Metallhydrid (5) mit einem Loch (5a) durchbohrt ist, das gegenüber dem Loch (3) der Platten liegt, um einen axialen Durchlass zu bilden;
- einen abnehmbaren Deckel (12) zum dichten reversiblen Verschließen des zweiten Endes (11c) des hohlen zylindrischen Gefäßes (11), wobei der Deckel eine Einlass-/Auslassöffnung für den Wasserstoff umfasst.

5. Behälter (10) nach Anspruch 4, umfassend ferner ein Rohr (13) zur passiven Diffusion von Wasserstoff, das sich axial entlang des hohlen zylindrischen Gefäßes durch die Löcher (3, 5a) der starren Platten (2) und der Hydridscheiben (5) der Pellets (1) erstreckt und in dichter Fluidverbindung mit der Öffnung des abnehmbaren Deckels zum dichten reversiblen Verschließen steht.

6. Behälter (10) nach Anspruch 5, wobei das Rohr (13) zur passiven Diffusion von Wasserstoff und aus einem für Wasserstoff porösen Material ist.

7. Behälter (10) nach Anspruch 4, wobei die Einlass-/Auslassöffnung für den Wasserstoff in Fluidverbindung mit einem Schließ-/Öffnungsventil (14) steht.

8. Behälter (10) nach einem der Ansprüche 4 bis 7, wobei das hohle zylindrische Gefäß (11) zwischen einer letzten starren Platte (2a) des Stapels und dem abnehmbaren Deckel (12) zum dichten reversiblen Verschließen einen freien Raum (16) zur axialen Ausdehnung des Stapels aus Pellets (1, 1a) umfasst.

9. Behälter (10) nach Anspruch 8, der dazu ausgebildet ist, in liegender Position verwendet zu werden, in der die Längsachse (X-X) des Behälters in Bezug auf die Schwerkraft horizontal verläuft, wobei der Behälter (10) ferner eine Druckfeder zwischen der letzten starren Platte (2a) des Stapels und dem abnehmbaren Deckel (12) zum dichten reversiblen Verschließen umfasst.

## Claims

1. Pellet (1) for storing hydrogen in solid form intended to be incorporated into a hydrogen storage tank (10), the pellet (1) being **characterized in that** it comprises a peripheral ring (4) of a given external diameter (D4) made of expanded natural graphite (ENG) of a given height (H4), surrounding a wafer of a metal hydride (5) in the form of compacted powder.

2. Pellet according to Claim 1, wherein the peripheral ENG ring is formed by an axial stack of annular ENG sheets having a height (H4a) which is less than the height (H4) of the peripheral ring.

3. Pellet according to Claim 2, wherein the annular ENG sheets have a height of the order of tenths of a millimeter, preferably between 1 and 5 tenths of a millimeter.

4. Tank (10) for storing hydrogen in solid form, comprising:
- a hollow cylindrical container (11) extending along a longitudinal axis (X-X), closed at a first end (11a), open at a second end (11c), delimited by a thermally conductive outer radial wall (11b), and comprising an alternating stack (1a) of rigid disks (2, 2a) made of a thermally conductive material of a given diameter (D2) and pellets (1) according to any one of Claims 1 to 3, each pellet being interposed between two rigid disks (2, 2a), each rigid disk (2, 2a) being pierced by a hole (3) and each metal hydride wafer (5) being pierced by a hole (5a) facing the hole (3) in the disks to form an axial passage;
- a removable cover (12) for reversibly sealing the second end (11c) of the hollow cylindrical container (11), the cover comprising a hydrogen inlet/outlet orifice.

5. Tank (10) according to Claim 4, further comprising a passive hydrogen diffusion tube (13) extending axially along the hollow cylindrical container, through the holes (3, 5a) in the rigid disks (2) and the hydride wafers (5) of the pellets (1), and in sealed fluidic communication with the orifice in the removable reversibly-sealing cover.

6. Tank (10) according to Claim 5, wherein the passive hydrogen diffusion tube (13) is made of a material porous to hydrogen.

7. Tank (10) according to Claim 4, wherein the hydrogen inlet/outlet orifice is in fluidic connection with a closing/opening valve (14).

8. Tank (10) according to any one of Claims 4 to 7, wherein the hollow cylindrical container (11) comprises, between a last rigid disk (2a) of the stack and the removable reversibly-sealing cover (12), a free axial expansion space (16) for the stack of pellets (1, 1a).

9. Tank (10) according to Claim 8, shaped to be used in an horizontal position in which the longitudinal axis (X-X) of the container is horizontal in relation to gravity, the tank (10) further comprising a compression spring between the last rigid disk (2a) of the stack and the removable reversibly-sealing cover (12).
